# EUROPÄISCHE PATENTANMELDUNG

(11) **EP 4 410 481 A2**
(43) Veröffentlichungstag der Anmeldung: **07.08.2024**
(21) Anmeldenummer: 23215166.2
(22) Anmeldetag: 08.12.2023
(51) Int. Cl.: B25B 5/00

(54) **SYSTEM ZUR KLEMMUNG VON BAUTEILEN**

(30) Priorität: 13.12.2022 DE 102022133133
(71) Anmelder: Bundesdruckerei GmbH, 10969 Berlin (DE)
(72) Erfinder: Mathey, Marc, 30890 Barsinghausen (DE)
(74) Vertreter: Hentrich Patent- & Rechtsanwaltspartnerschaft mbB

(57) **Zusammenfassung**

Die Erfindung betrifft einen manuell handhabbaren Niederhalter (16) mit einem Aufnahmeblock (18). In einer Kavität (34) des Aufnahmeblocks (18) kann eine Fassung (12) für ein kleines optisches Bauteil (14) temporär fixiert werden. In der Fassung (12) wiederum kann dann das optische Bauteil (14) positioniert werden und mit einem von dem Niederhalter (16) geführten und federgespannten Stößel (26) in einer gewünschten Position temporär fixiert werden. Da der Niederhalter (16) mit dem Aufnahmeblock (18) verbunden ist, ergibt sich ein geschlossener Kraftfluss einer Klemmkraft (50) durch den Stößel (26), das optische Bauteil (14), die Fassung (12), den Aufnahmeblock (18) und den Niederhalter (16) zurück zum Stößel (26). Zur dauerhaften Verbindung des optischen Bauteils (14) und der Fassung (12) können diese vorgespannt über den Niederhalter (16) im Aufnahmeblock (18) manuell handgehabt werden, um bspw. Klebstoff zu applizieren.

## Beschreibung

Die vorliegende Erfindung betrifft einen Niederhalter zur Erzeugung einer Klemmkraft sowie Systeme zur Klemmung zweier Bauteile mit einem solchen Niederhalter. Die Erfindung betrifft ferner eine Aufnahmevorrichtung für eines dieser Systeme. Schließlich betrifft die Erfindung auch eine Verwendung der Systeme.

Auf dem Gebiet der Montagetechnik ist eine Vielzahl von Handhabungs- und Fügeprozessen, nebst zugehöriger Vorrichtungen, bekannt.

Die CN113043013A beschreibt bspw. eine Pressvorrichtung zur Bestückung von Platinen, wobei ein Pressarm mit Rückstellfeder vorgesehen ist. Die Platine kann in ein Gehäuse eingesetzt und dann mit dem Pressarm in ihren Sitz gepresst werden.

Derartige Pressvorrichtungen eigenen sich jedoch kaum zur Montage zweier Fügepartner, die unter Verwendung eines Bindemittels gefügt werden sollen. Hierbei wird üblicherweise ein Bauteil an einem anderen Bauteil positioniert und unter Zugabe des Bindemittels fest mit diesem verbunden. In der Regel müssen die Fügepartner dabei eine gewisse Zeit in ihrer Fügeposition fixiert werden, damit das Bindemittel austrocknen kann.

Da der oben beschriebene Pressarm der Pressvorrichtung nach dem Stand der Technik jedoch manuell betätigt wird, wobei stets eine manuelle Kraft gegen die Rückstellfeder aufgebracht werden muss, kann nicht prozesssicher gewährleistet werden, dass die beiden Bauteile ihre relative Fügeposition beibehalten, bis das Bindemittel Eigenstabilität erreicht hat. Dies gilt vor allem dann, wenn hohen Anforderungen an die Positions- und Wiederholgenauigkeit der Fügepartner gestellt werden. Auch ist eine Handhabung der relativ zueinander positionierten Bauteile als Ganzes bzw. als durch Klemmen vormontierte Baugruppe schwierig, wenn bspw. das Bindemittel noch nicht verfestigt ist und die vormontierten Bauteile bzw. Fügepartner während der Handhabung über die Pressvorrichtung in Fügeposition gehalten werden müssen. Eine solche Handhabung kann auch erforderlich sein, um der vormontierte Baugruppe das Bindemittel zuzuführen bzw. eine manuelle Zugänglichkeit zu den Applikationsstellen für das Fügemittel zu verbessern.

Der Erfindung liegt daher die Aufgabe zugrunde, eine möglichst aufwandsarme Alternative vorschlagen, um kleine bzw. leichte Bauteile sicher, präzise und in handhabbarer Weise gegeneinander zu verspannen bzw. vorzumontieren. Die vormontierten Bauteile sollen als Verbund im geklemmten Zustand auch sicher handhabbar sein.

Die Aufgabe wird durch die Gegenstände der unabhängigen Patentansprüche 1, 7, 8, 9 und 10 gelöst. Bevorzugte Ausführungsformen der Erfindung ergeben sich aus den in den Unteransprüchen genannten Merkmalen und weiterhin auch aus der vorliegenden Offenbarung als Ganzes.

Ein erster Aspekt der Erfindung betrifft einen Niederhalter zur Erzeugung einer Klemmkraft, umfassend:
- eine Distanzstruktur mit einer Befestigungsschnittstelle;
- einen Kragarm, der beabstandet von der Befestigungsschnittstelle von der Distanzstruktur auskragt und der eine, entlang dem Kragarm von der Distanzstruktur beabstandete, Stößelaufnahme aufweist; sowie
- einen Stößel, der von der Stößelaufnahme geführt wird und in einem translatorischen Freiheitsgrad wahlweise in eine Klemmrichtung oder eine Freigaberichtung verlagerbar ist, wobei der Stößel sich, jeweils lokal bezogen auf die Stößelaufnahme, in Klemmrichtung der Befestigungsschnittstelle annähert und in Freigaberichtung von dieser entfernt; wobei
- eine Klemmfeder mit einer Federsteifigkeit von 0,05 N/mm bis 0,3 N/mm vorgesehen ist, die zur Erzeugung der Klemmkraft in Freigaberichtung spannbar und in Klemmrichtung entspannbar ist.

Die Distanzhülse kann vorzugsweise länglich ausgebildet sein. Die Distanzhülse kann bspw. zylindrisch, quaderartig oder auch z-artig ausgebildet sein. Sie kann bspw. hohl sein oder als Vollteil vorliegen.

Als Befestigungsschnittstelle kann die Distanzhülse bspw. ein Gewinde, ein Durchgangsloch für eine Schraube oder einen Bolzen oder auch einen auf Passung gefertigten Abschnitt umfassen wie etwa einen Schaft zum Einstecken. Grundsätzlich dient die Befestigungsschnittstelle einer direkten oder indirekten Befestigung an einem ersten Bauteil, gegen welches ein zweites Bauteil mit dem Niederhalter der Erfindung geklemmt werden kann.

Im Fall einer Passung kommt vorzugsweise eine Spiel-, Übergangs- oder leichte (mit Handkraft fügbare) Presspassung in Betracht. Somit kann die Distanzhülse an dem ersten Bauteil (direkte Befestigung) oder einer, für das erste Bauteil vorgesehenen, Aufnahmevorrichtung (indirekte Befestigung) befestigt werden und dabei bspw. noch drehbar sein, um den Niederhalter der Erfindung als Ganzes auszurichten.

Auch im Falle eines Gewindes, kann der Niederhalter der Erfindung bspw. über die Gewindestellung bei der Befestigung noch ausgerichtet werden. Das Gewinde kann auch über eine Durchgangsschraube realisiert werden, welche die Distanzstruktur, vorzugsweise die Distanzhülse, zumindest abschnittsweise durchragt.

Der Kragarm kann mit der Distanzstruktur integral ausgebildet sein oder an dieser statisch (bspw. fest eingespannt oder zusammengesetzt) sowie auch beweglich gelagert sein. Vorzugsweise ist der Kragarm schwenkbar und lässt sich in einer gewünschten Ausrichtung fixieren. Die Fixierung kann bspw. durch eine Klemmschraube erfolgen, wobei diese Rolle bspw. von der oben angesprochenen Durchgangsschraube übernommen werden kann.

Der Kragarm kann auch T-artig ausgebildet sein und, rein beispielhaft, beidseitig von der Distanzstruktur auskragen. Der Kragarm kann dann bspw. auch zwei sich gegenüberliegende Stößelaufnahme umfassen.

Die Stößelaufnahme kann bspw. als Durchgangsbohrung vorliegen. Bevorzugt ist sie mit dem Stößel auf Passung gefertigt, um eine sichere, stabile und leichtgängige Führung des Stößels zu gewährleisten. Das obige Merkmal "lokal bezogen auf die Stößelaufnahme" umfasst in seiner Bedeutung, mit anderen Worten ausgedrückt, dass ein frei wählbarer Referenzpunkt oder Referenzabschnitt am Stößel betrachtet wird, der sich gerade in oder an der Stößelaufnahme befindet. Dieser Referenzpunkt oder Referenzabschnitt verlagert sich dann bei Bewegung des Stößels in Klemmrichtung so, dass er sich der Befestigungsschnittstelle annähert und in Freigaberichtung so, dass er sich von dieser entfernt. "Annähern" oder "entfernen" kann sowohl ein Annähern oder Entfernen "auf direktem Wege", als auch auf "indirektem Wege" umfassen. Auf direktem Wege kann der Stößel bzw. der Referenzpunkt oder Referenzabschnitt sich der Befestigungsschnittstelle bspw. annähern oder von dieser entfernen, indem der Stößel schräg zur Distanzstruktur verlagert wird. Auf indirektem Wege kann der Stößel bzw. der Referenzpunkt oder Referenzabschnitt sich der Befestigungsschnittstelle bspw. annähern oder von dieser entfernen, indem der Stößel parallel zur Distanzstruktur verlagert wird.

Der Stößel selbst dient der Übertagung der Klemmkraft auf die zu klemmenden Bauteile (auch als Fügepartner bezeichnet) und besteht zumindest abschnittsweise und/oder anteilig aus einem dafür geeigneten Material. Geeignete Materialien sind bspw. Kunststoff, Holz oder Metall. Besonders bevorzugt ist das Material weicher, als ein Material des zweiten Bauteils, das gegen das erste Bauteil verspannt werden soll. Der Stößel ist vorzugsweise so auf die Geometrie der Distanzstruktur abgestimmt, dass er ein gegebenes erstes Bauteil, das direkt oder indirekt mit der Distanzstruktur über die Befestigungsschnittstelle verbunden werden kann, zu kontaktieren vermag. Ein hierfür wichtiger Parameter des Stößels, welchen der Fachmann anhand der hierin offenbarten Lehre und der gewünschten zu klemmenden Bauteile unter Berücksichtigung der Beschaffenheit der Distanzhülse selbstständig auslegen kann, ist die Länge des Stößels.

Der Niederhalter der Erfindung bietet den Vorteil, dass mit ihm in einfacher und sicherer Weise, insbesondere in widerholgenauer und schonender Weise, eine Klemmkraft auf zwei Bauteile ausgeübt werden kann, die wenigstens temporär gegeneinander verspannt werden sollen. Hierfür kann das erste Bauteil selbst eine zu der Befestigungsschnittstelle des Niederhalters komplementäre Befestigungsschnittstelle aufweisen, sodass das zweite Bauteil direkt zwischen dem ersten Bauteil und dem Stößel einklemmbar ist. Auch kann zwischen der Befestigungsschnittstelle des Niederhalters und dem ersten Bauteil noch eine Aufnahmevorrichtung zwischengeschaltet sein, die einerseits die komplementäre Befestigungsschnittstelle aufweist und andererseits das erste Bauteil trägt. Durch die angegebenen Federsteifigkeiten eignet sich der Niederhalter der Erfindung besonders gut zur sicheren Klemmung leichte und feine bzw. empfindliche Teile, wie etwa optischer Funktionselemente. Beispiele für optische Funktionselemente sind unter anderem optische Filter, Linsen und Spiegel. Mit den genannten Federsteifigkeiten lassen sich besonders gut kleinere Klemmkräfte realisieren, wodurch eine Oberfläche des zweiten Bauteils, die mit dem Stößel bestimmungsgemäß in Kontakt kommt, geschont wird. Diese vorteilhafte Wirkung kann durch das Material des Stößels noch weiter gefördert werden. Besonders vorteilhaft kann der Niederhalter der Erfindung genutzt werden, um solche Bauteile als Vorbereitung für eine Handhabungsoperation vorzumontieren. Durch Herstellung eines Klemmverbunds, umfassend den Niederhalter der Erfindung und die durch diesen gegeneinander verspannten Bauteile, ist eine sichere Handhabung der Fügepartner in Fügeposition möglich. Bei kleinen bzw. leichten Bauteilen kann der Klemmverbund einfach manuell handgehabt werden, um bspw. eine weiteren Fügeoperation daran vorzunehmen. Bspw. kann ein Klebstoff manuell appliziert werden, um die Fügepartner dauerhaft zu verbinden.

Die Klemmfeder kann wahlweise als Zug- oder Druckfeder vorliegen. Eine Zugfeder speichert Energie bzw. wird gespannt, wenn sie auseinandergezogen wird. Eine Druckfeder wird entsprechend gespannt, wenn sie zusammengedrückt wird. Demnach strebt die Zugfeder eine Abgabe dieser Energie durch Kontraktion an, eine Druckfeder durch Expansion.

Somit kann die Zugfeder in Freigaberichtung, vorzugsweise von Hand, auseinandergezogen werden, dadurch von den zu klemmenden Bauteilen entfernt werden und die bspw. manuell zugeführte Energie speichern. Der Stößel gibt somit einen Bereich frei, in dem das zweite Bauteil an dem ersten Bauteil in Fügeposition positioniert werden kann.

In der gegenläufigen Klemmrichtung ist die Zugfeder dann, vorzugsweise nach manuellem Loslassen, bestrebt, den Stößel wieder in Richtung der zu klemmenden Bauteile zurückzuziehen. Bei Kontaktierung der Oberfläche des dem Stößel zugewandten zweiten Bauteils wird dieses durch die Klemmkraft gegen das erste Bauteil verspannt. Bei der Druckfeder erfolgen die Abläufe entsprechend kinetisch umgekehrt (Energieaufnahme durch Zusammendrücken in Freigaberichtung und Energieabgabe durch Expansion in Klemmrichtung).

Die konkrete Federsteifigkeit wählt der Fachmann anhand der hierin offenbarten Lehre und unter Berücksichtigung der Größe, Masse, Oberflächenbeschaffenheit und Belastbarkeit der zu klemmenden Bauteile sowie mit Hinblick auf die erforderliche Klemmkraft. Letztere hängt von der angestrebten weiteren Verwendung der geklemmten Bauteile ab.

Die Federsteifigkeit kann bspw. 0,05 N/mm, 0,1 N/mm, 0,15 N/mm, 0,2 N/mm, 0,25 N/mm oder 0,3 N/mm betragen. Sie kann auch zwischen 0,05 N/mm und 0,25 N/mm oder auch zwischen 0,05 N/mm und 0,2 N/mm oder auch zwischen 0,1 N/mm und 0,2 N/mm liegen, wobei die Randwerte jeweils einbezogen sind. Ein besonders bevorzugter Wert liegt bei 1,2 N auf 12 mm Federweg.

Eine Nenn-Federkraft der Klemmfeder (was der Klemmkraft des Niederhalters der Erfindung entspricht) kann bspw. zwischen 0,5 N und 9 N liegen, bevorzugt zwischen 0,5 N und 5 N, weiterhin bevorzugt zwischen 0,5 N und 4 N, weiterhin bevorzugt zwischen 0,5 N und 3 N, weiterhin bevorzugt zwischen 0,5 N und 2,5 N, weiterhin bevorzugt zwischen 0,5 N und 2 N und besonders bevorzugt zwischen 0,5 N und 1,5 N, wobei die Randwerte jeweils einbezogen sind.

Versuche der Anmelderin haben gezeigt, dass ich die genannten Dimensionierungen insbesondere gut für optische Bauteile im Bereich von sensorischen Einrichtungen, wie etwa Prüfgeräten, eignen.

Grundsätzlich können die Distanzstruktur, der Kragarm, der Stößel die Klemmfeder sowie alle anderen strukturellen Komponenten des Niederhalters der Erfindung jeweils ein- oder mehrteilig ausgeführt sein. Dies gilt auch für die später noch beschriebenen Vorrichtungen.

In einer bevorzugten Ausgestaltung des Niederhalters der Erfindung ist vorgesehen, dass der Stößel zumindest an einem der Befestigungsschnittstelle zugewandten Ende aus Kunststoff besteht.

Mit anderen Worten, betrifft dies jenes Ende des Stößels, welches das zweite Bauteil bestimmungsgemäß kontaktiert. Der Kunststoff kann bevorzugt ein weicher Kunststoff sein, besonders bevorzugt kann der Kunststoff Teflon, Nylon, PE oder PET umfassen. Besonders bevorzugt geht der Kunststoff keine Verbindung mit UV-härtenden oder Zwei-Komponenten-Epoxidharz-Klebstoffen ein. Diese kommen in der Fügung optischer Bauteile häufig zum Einsatz.

Die optischen Bauteile können somit besonders sicher und schonend geklemmt werden.

In einer bevorzugten Ausgestaltung des Niederhalters der Erfindung ist vorgesehen, dass der Stößel zumindest an einem der Befestigungsschnittstelle zugewandten Ende verrundet ist.

Neben den Materialeigenschaften kann auch dies zu einer besonders schonenden Klemmung der optischen Bauteile beitragen. Ein Radius der Verrundung kann bspw. 1 mm bis 1,5 mm betragen.

In einer bevorzugten Ausgestaltung des Niederhalters der Erfindung ist vorgesehen, dass die Befestigungsschnittstelle ein Gewinde umfasst.

Diese eignet sich gleichsam für eine aufwandsarme und flexible Verbindung und erlaubt auch eine rotatorische Ausrichtung des Niederhalters und damit des Stößels.

In einer bevorzugten Ausgestaltung des Niederhalters der Erfindung ist vorgesehen, dass die Distanzstruktur eine Lagerstelle aufweist, an welcher der Kragarm um die Distanzstruktur schwenkbar gelagert ist.

Die Distanzstruktur kann bspw. eine Auflagefläche umfassen, in der eine Gewindebohrung oder einer einfachen Bohrung vorgesehen ist. Der Kragarm kann dann bspw. mit einer Schraube oder auch einem Bolzen in einfacher Weise an der Distanzstruktur angebracht werden. Die Schraube bietet hier den besonderen Vorteil, dass der Kragarm vor finalem Anziehen der Schraube schwenkbar ist und durch Anziehen der Schraube fixierbar ist. Eine solche Schraube kann bspw. auch als Durchgangsschraube vorgesehen sein und zugleich die Befestigungsschnittstelle bereitstellen.

Generell bietet die Schwenkbarkeit den Vorteil, dass der Kragarm und damit der Stößel ausgerichtet werden können, um das zweite Bauteil präzise in der angestrebten Fügeposition zu klemmen.

In einer bevorzugten Ausgestaltung des Niederhalters der Erfindung ist vorgesehen, dass die Klemmfeder eine Zugfeder ist, die mit dem Stößel und dem Kragarm wirkverbunden ist.

Der Niederhalter der Erfindung lässt sich so besonders aufwandsarm realisieren.

Vorzugsweise ist die Zugfeder an einem ihrer Enden mit dem Stößel und am anderen Ende mit dem Kragarm verbunden.

In einer bevorzugten Ausgestaltung des Niederhalters der Erfindung ist vorgesehen, dass der translatorische Freiheitsgrad des Stößels durch die Klemmfeder und/oder durch einen Anschlag begrenzt ist.

Vorzugsweise begrenzt der Anschlag den translatorischen Freiheitsgrad in Klemmrichtung und die Klemmfeder in Freigaberichtung, bspw. durch ihren maximalen Federweg. Die Begrenzung des translatorischen Freiheitsgrads in Klemmrichtung durch den Anschlag ist vorzugsweise so ausgelegt, dass die Klemmfeder stets vorgespannt ist. Somit kann mit dem Niederhalter der Erfindung über den gesamten translatorischen Freiheitsgrad des Stößels hinweg eine Klemmkraft aufgebracht werden.

Ein weiterer Aspekt der Erfindung betrifft ein System zur Klemmung zweier Bauteile, umfassend:
- einen erfindungsgemäßen Niederhalter gemäß der vorhergehenden Beschreibung; und
- ein erstes Bauteil mit einem Klemmbereich in dem ein zweites Bauteil positionierbar ist und mit einer komplementären Befestigungsschnittstelle, die mit einer Befestigungsschnittstelle des Niederhalters verbindbar oder verbunden ist, sodass ein Stößel des Niederhalters sich bei dessen Verlagerung in Klemmrichtung auf den Klemmbereich zu verlagert.

Das erste Bauteil kann vorzugsweise eine Trägerstruktur umfassen, an der das zweite Bauteil angefügt werden soll. Der Klemmbereich kann sich bspw. durch eine entsprechend mechanisch bearbeitete Oberfläche oder auch eine Fassung auszeichnen. Das zweite Bauteil kann vorzugsweise ein optisches Bauteil sein, wie etwa eine Linse, ein Filter oder ein Spiegel.

Die komplementäre Befestigungsschnittstelle ist je nach Befestigungsschnittstelle des Niederhalters bzw. der Distanzstruktur passend dazu ausgebildet. Entsprechend kann sie bspw. ein komplementäres Gewinde oder einen komplementär auf Passung gefertigten Abschnitt umfassen und ist bei diesem erfindungsgemäßen System direkt an dem ersten Bauteil hergestellt.

Je nach den bestimmungsgemäß zu klemmenden Bauteilen, sind Längen der Distanzstruktur, des Kragarms und des Stößels so gewählt, dass das zweite Bauteil in einer gewünschten Klemmposition positioniert und gegen das erste Bauteil verspannt werden kann.

Der Begriff "Position" kann im Kontext der Erfindung generell auch die Orientierung umfassen, je nachdem, was für die gewünschte Verspannung der Bauteile eine Rolle spielt.

In einer bevorzugten Ausgestaltung des Systems der Erfindung ist vorgesehen, dass das erste Bauteil mit dem Niederhalter verbunden ist und das System ein zweites Bauteil umfasst, das sich im Klemmbereich in einer Klemmposition an dem ersten Bauteil befindet, wobei der Stößel des Niederhalters eine Klemmkraft überträgt, die einen geschlossenen Kraftfluss vom Niederhalter über das zweite Bauteil und das erste Bauteil wieder zum Niederhalter bewirkt.

Mit anderen Worten liegt hier ein Klemmverbund vor, wie oben bereits exemplarisch beschrieben.

Ein weiterer Aspekt der Erfindung betrifft ein System zur Klemmung zweier Bauteile, umfassend:
- einen erfindungsgemäßen Niederhalter gemäß der vorhergehenden Beschreibung; und
- eine Aufnahmevorrichtung mit einem Aufnahmebereich, in dem ein erstes Bauteil positionierbar ist und mit einer komplementären Befestigungsschnittstelle, die mit einer Befestigungsschnittstelle des Niederhalters verbindbar oder verbunden ist, sodass ein Stößel des Niederhalters sich bei dessen Verlagerung in Klemmrichtung auf den Aufnahmebereich zu verlagert.

Dieses alternative erfindungsgemäße System ähnelt dem zuvor beschriebenen System und unterscheidet sich lediglich dadurch, dass der Niederhalter nicht direkt an dem ersten Bauteil befestigt wird, sondern an der Aufnahmevorrichtung, die das erste Bauteil bestimmungsgemäß aufnimmt.

Dies bietet den Vorteil, dass an dem ersten Bauteil keine komplementäre Befestigungsschnittstelle gefertigt sein muss. Außerdem eignet sich das alternative System besonders gut zur Handhabung sehr kleiner Bauteile, da die Aufnahmevorrichtung eine Angriffsstruktur bilden kann.

In einer bevorzugten Ausgestaltung des Systems der Erfindung ist vorgesehen, dass die Aufnahmevorrichtung mit dem Niederhalter verbunden ist und das System ein erstes Bauteil mit einem Klemmbereich umfasst, das im Aufnahmebereich positioniert ist und wobei das System ferner ein zweites Bauteil umfasst, das sich im Klemmbereich in einer Klemmposition an dem ersten Bauteil befindet, wobei der Stößel des Niederhalters eine Klemmkraft überträgt, die einen geschlossenen Kraftfluss vom Niederhalter über das zweite Bauteil, das erste Bauteil und die Aufnahmevorrichtung wieder zum Niederhalter bewirkt.

Mit anderen Worten liegt auch hier wiederum ein Klemmverbund vor, wie oben bereits exemplarisch beschrieben.

Beide alternativen Systeme der Erfindung sind sehr aufwandsarm realisierbar und lassen eine manuelle Handhabung vormontierter Bauteile in einfacher und sicherer Weise zu.

Ein weiterer Aspekt der Erfindung betrifft eine Aufnahmevorrichtung für ein erfindungsgemäßes System gemäß der vorhergehenden Beschreibung, umfassend:
- einen Aufnahmebereich mit wenigstens einer Kavität, in der ein erstes Bauteil positioniert werden kann;
- einen Klemmmechanismus, der zumindest abschnittsweise in die Kavität hinein verlagerbar ist, um ein darin positioniertes erstes Bauteil zu sichern; und
- eine komplementäre Befestigungsschnittstelle, die mit einer Befestigungsschnittstelle eines Niederhalters des Systems verbindbar ist.

Die Aufnahmevorrichtung kann bspw. blockartig ausgebildet sind. Als Materialien kommen bspw. Aluminium oder Edelstahl oder auch Kunststoff in Betracht.

In einer bevorzugten Ausgestaltung der Aufnahmevorrichtung der Erfindung ist vorgesehen, dass der Klemmmechanismus eine Klemmschraube zur Klemmung des ersten Bauteils in der Kavität umfasst.

Somit ist eine einfache und sichere Klemmung möglich und auch eine Klemmung von Bauteilen unterschiedlicher Größe.

In einer bevorzugten Ausgestaltung der Aufnahmevorrichtung der Erfindung ist vorgesehen, dass die Kavität eine Freimachung aufweist, die ein Einsetzen oder Entnehmen des ersten Bauteils mit einem Werkzeug, wie bspw. einer Pinzette, gestatten.

Dies ist besonders vorteilhaft für kleine Bauteile.

Ein weiterer Aspekt der Erfindung betrifft eine Verwendung eines erfindungsgemäßen Systems gemäß der vorhergehenden Beschreibung, wobei wenigstens folgende Schritte durchgeführt werden:
- Positionierung des zweiten Bauteils in einer Klemmposition im Klemmbereich an dem ersten Bauteil;
- Konfiguration des Systems, sodass der Stößel des Niederhalters eine Klemmkraft überträgt, die einen geschlossenen Kraftfluss vom Niederhalter über das zweite Bauteil und das erste Bauteil wieder zum Niederhalter bewirkt und das zweite Bauteil dadurch an dem ersten Bauteil geklemmt wird; und
- zumindest einmalige Veränderung der Position des so konfigurierten Systems mit den geklemmten Bauteilen als Ganzes und/oder Durchführung wenigstens einer Fügeoperation zur Verbindung des ersten und zweiten Bauteils.

In einer bevorzugten Ausgestaltung der erfindungsgemäßen Verwendung ist vorgesehen, dass ein fließfähiges Bindemittel zumindest abschnittsweise zwischen die geklemmten Bauteile gegeben wird, wobei zwecks Zuführung des Bindemittels eine Handhabung des Systems als Ganzes stattfindet und dabei eine Veränderung der Klemmposition des ersten und zweiten Bauteils vor dem Aushärten des Bindemittels durch den Niederhalter vermieden wird.

In einer bevorzugten Ausgestaltung der erfindungsgemäßen Verwendung ist vorgesehen, dass das fließfähige Bindemittel zumindest abschnittsweise zwischen das erste Bauteil und das zweite Bauteil gelangt, wobei ein Aufschwimmen des zweiten Bauteils gegenüber dem ersten Bauteil durch den Niederhalter vermieden wird.

Nochmals mit anderen Worten zusammengefasst, betrifft die Erfindung einen manuell handhabbaren Niederhalter mit einem Aufnahmeblock. In einer Kavität des Aufnahmeblocks kann eine Fassung für ein kleines optisches Bauteil temporär fixiert werden. In der Fassung wiederum kann dann das optische Bauteil positioniert werden und mit einem von dem Niederhalter geführten und federgespannten Stößel in einer gewünschten Position temporär fixiert werden. Da der Niederhalter mit dem Aufnahmeblock verbunden ist, ergibt sich ein geschlossener Kraftfluss einer Klemmkraft durch den Stößel, das optische Bauteil, die Fassung, den Aufnahmeblock und den Niederhalter zurück zum Stößel. Zur dauerhaften Verbindung des optischen Bauteils und der Fassung können diese vorgespannt über den Niederhalter im Aufnahmeblock manuell handgehabt werden, um bspw. Klebstoff zu applizieren.

Die Erfindung lässt sich mit anderen Worten auch nochmals wie folgt zusammenfassen: Offenbart wird zum einen ein Niederhalter zur Fixierung von Bauteilen und Komponenten während der Montage. Für ein Produkt müssen optische Bauteile wie Linsen, Filter und Spiegel montiert werden. Die finale Befestigung geschieht durch Löten oder Kleben, dabei dürfen die Bauteile weder den Winkel noch die Lage verändern. Das bedeutet, die zu montierende Komponente muss lagerichtig fixiert werden. Ein Verschieben oder Aufschwimmen der Komponente während des eigentlichen Befestigungsprozesses muss verhindert werden. Durch die Erfindung kann eine mechanische Kraft erzeugt werden, mit der das Bauteil sicher an der vordefinierten Position gehalten wird. Der Niederhalter kann zur Befestigung bzw. Abstützung von Drehmomenten vorhandene Bohrungen und Gewinde in dem Bauteil verwenden. Dadurch ergibt sich eine sehr kompakte Einheit, welche im Raum um 360° frei rotierbar ist. Hierdurch kann eine lageunabhängige und beschädigungsfreie Fixierung von empfindlichen Bauteilen erfolgen. Auch eine Kosteneinsparung ist durch Wiederverwendbarkeit des Niederhalters und Minimierung von Ausschuss möglich. Es wird eine einfache Handhabung und 3-D Handling im freien Raum ermöglicht. Im Kern fixiert ein kraftbeaufschlagter Niederhalter das Bauteil bei nachfolgenden Arbeitsschritten, wobei es sich um Linsen und optische Filter handeln kann, die mit einem federbelasteten Kunststoffstößel während der Befestigung in dem Produkt sicher fixiert werden. Solche Produkte können bspw. im Bereich der Sensorik eine Rolle spielen. Die geforderte Wiederholgenauigkeit der Befestigung bei der Montage der optischen Bauteile kann dabei im Bereich von +/- 1/100 mm liegen, was besonders anspruchsvoll ist, wenn kleine oder leichte Bauteile verklebt werden sollen. Es besteht die Gefahr, dass die Bauteile während der Montage bzw. dem Kleben ihre vordefinierte Position verändern und bspw. aufschwimmen, kippen oder sich verschieben. Um dies auszuschließen, muss die relative Position der Bauteile während des Montageprozesses "Kleben" fixiert werden. Da vor allem kleine Bauteile beim Befestigungsprozess in mehreren Achsen um bis zu 360° bewegt werden müssen, um den Klebstoff zu platzieren, stellt die Erfindung eine Vorrichtung bereit, die am Bauteil bzw. Fügepartner selbst anbringbar ist. Offenbart wird zudem ein Aufnahmeblock, der eines der zu fügenden Bauteile und den Niederhalter aufnehmen kann. Der Aufnahmeblock kann das eine Bauteil sicher an der vordefinierten Position halten, indem eine stirnseitig angeordnete Klemmschraube angezogen wird. Der oben beschriebene Niederhalter findet hier am Aufnahmeblock die erneute Anwendung (alternativ zur Befestigung direkt an einem der Bauteile) zur (Vor-)Fixierung der optischen Bauteile am Trägerteil. Durch die Abmessung des Aufnahmeblocks von bspw. 48 mm x 30 mm x 15 mm ergibt sich eine sehr kompakte Einheit, welche im Raum um bis zu 360° frei rotierbar ist. Durch zwei seitlichen Bohrungen kann die gefügte Baugruppe (bspw. die geklebten Bauteile) vor und nach der Montage mit einer Pinzette in dem Aufnahmeblock platziert beziehungsweise entnommen werden. In dem beschriebenen Aufnahmeblock kann bspw. eine Haltehülsen für optische Filter und Linsen, während der Befestigung durch bspw. Kleben, sicher mit einer Klemmschraube fixiert werden. In bspw. eine Gewindebohrung am Aufnahmeblock kann der Niederhalter, der auf die optischen Komponenten drücken soll, eingeschraubt werden. Bei dem verwendeten Niederhalter bewegt sich die zum Drücken aufgebrachte Kraft vorzugsweise zwischen 0,5 N und 1,5 N. Die benötigte und maximal zulässige Kraft ist dabei abhängig von der Dicke der verwendeten Optik. Für einen optischen Filter kann die Kraft bei etwa 1,2 N liegen, die bei einem Federweg von etwa 12 mm (Federsteifigkeit liegt in diesem Beispiel bei 0,1 N/mm) auftreten kann. Bei größeren und dickeren Optiken kann die Kraft bis zu 5 N betragen.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und deren skizzenhafter Darstellung erläutert. Hierbei zeigen:
- Figur 1: ein System zur Klemmung zweier Bauteile in einer ersten Ausführungsform;
- Figur 2: ein System zur Klemmung zweier Bauteile in einer zweiten Ausführungsform;
- Figur 3: einen Niederhalter zur Erzeugung einer Klemmkraft; und
- Figur 4: ein Blockschema einer Verwendung eines Systems zur Klemmung zweier Bauteile.

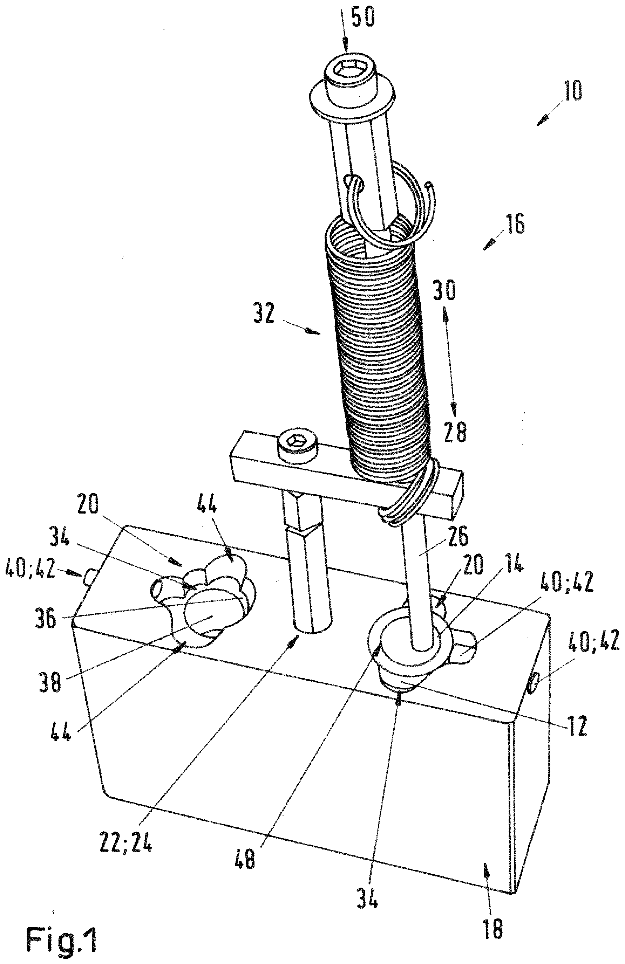

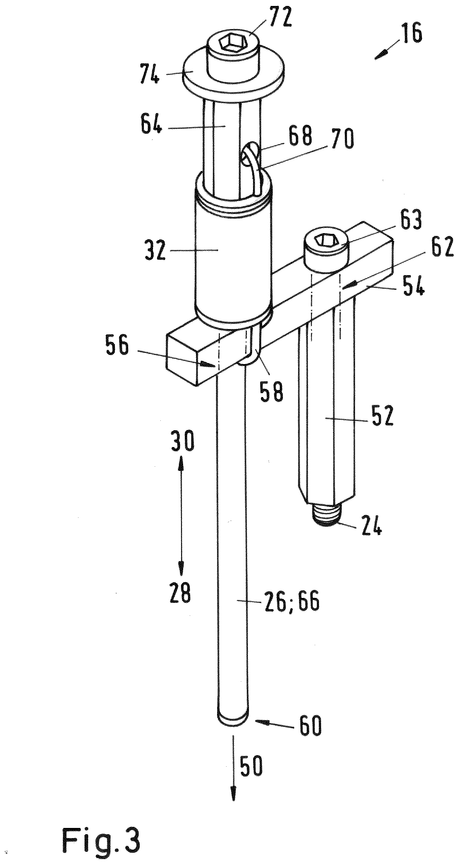

Figur 1 zeigt ein System 10 zur Klemmung zweier Bauteile 12, 14 in einer ersten Ausführungsform. Das System 10 umfasst einen Niederhalter 16, der rein exemplarisch wie in Figur 3 beschrieben ausgebildet sein kann und der später noch näher beschrieben wird.

Das System 10 umfasst ferner eine Aufnahmevorrichtung 18 mit einem Aufnahmebereich 20, in dem ein erstes Bauteil 12 positionierbar ist. Vordergründig zu Illustration zeigt Figur 1 die Aufnahmevorrichtung 18 mit zwei Aufnahmebereichen 20, zwischen denen der Niederhalter 16 in manchen Ausführungsformen hin- und hergeschwenkt werden kann. Grundlegend könnte auf den in Figur 1 links dargestellten Aufnahmebereich 20 aber auch verzichtet werden. Die Aufnahmevorrichtung 18 umfasst weiterhin eine komplementäre Befestigungsschnittstelle 22, die mit einer Befestigungsschnittstelle 24 (vgl. auch Figur 3) des Niederhalters 16 verbunden ist. Die komplementäre Befestigungsschnittstelle 22 umfasst hier rein exemplarisch eine Gewindebohrung.

Der Niederhalter 16 weist einen Stößel 26 auf. Der Stößel 26 ist wahlweise in eine Klemmrichtung 28 und in eine Freigaberichtung 30 verlagerbar, wobei der Stößel 26 sich in Klemmrichtung 28 auf den Aufnahmebereich 20 zu verlagert.

Der Stößel 26 ist in Freigaberichtung 30 über eine Klemmfeder 32 spannbar, die in Klemmrichtung 28 wieder entspannbar ist. Eine Klemmkraft 50 wirkt somit stets in Klemmrichtung 28.

Wird nun, wie in Figur 1 gezeigt, das erste Bauteil 12 an dem Aufnahmebereichen 20 positioniert und ein zweites Bauteil 14 an dem ersten Bauteil 12 positioniert, so kann das zweite Bauteil 14 an dem ersten Bauteil 12 mit dem Stößel 26, unter Ausnutzung der Klemmkraft 50 der Klemmfeder 32, geklemmt werden. Das erste Bauteil 12 kann bspw. einen Klemmbereich 48, rein beispielhaft in Form einer Fassung, aufweisen, in der das zweite Bauteil 14 in einer Klemmposition angeordnet werden kann. Wenn der Stößel 26 des Niederhalters 16 dann die Klemmkraft 50 überträgt, ergibt sich einen geschlossenen Kraftfluss vom Niederhalter 16 über das zweite Bauteil 14, das erste Bauteil 12 und die Aufnahmevorrichtung 18 wieder zurück zum Niederhalter 16.

Wie in Figur 1 gut erkennbar, umfasst der Aufnahmebereich 20 z.B. eine Kavität 34, die am in der Figur 1 links dargestellten Aufnahmebereich 20 gut sichtbar und am in der Figur 1 rechts dargestellten Aufnahmebereich 20 durch das erste Bauteil 12 größtenteils verdeckt ist. In der Kavität 34 kann das erste Bauteil 12 positioniert werden. Die Kavität 34 wird nun, rein zu illustrativen Zwecken, anhand des Aufnahmebereichs 20 links in Figur 1 näher beschrieben, da sie im Aufnahmebereich 20 rechts in Figur 1 durch die Bauteile 12, 14 größtenteils verdeckt ist. So ist erkennbar, dass die Kavität 34 mehrstufig ausgeführt sein kann, bspw. mit einem Auflagerand 36 für das erste Bauteil 12 und optional mit einem Sackloch 38. Das Sackloch 38 kann bspw. Tiefenstrukturen des ersten Bauteils 12 aufnehmen (sofern vorhanden) oder auch bspw. Klebstoffreste aufnehmen, wenn die Bauteile 12, 14 verklebt werden sollen.

Bevorzugt umfasst der Aufnahmebereich 20 einen Klemmmechanismus 40, der zumindest abschnittsweise in die Kavität 34 hinein verlagerbar ist, um das darin positionierte erste Bauteil 12 zu sichern. In dieser rein beispielhaften Ausführungsform kann dazu eine seitliche Madenschraube 42 vorgesehen sein.

Es kann auch vorteilhaft sein, wenn die Kavität 34 eine oder mehrere Freimachungen 44 aufweist, die ein Einsetzen oder Entnehmen des ersten Bauteils 12 mit einem Werkzeug, wie bspw. einer Pinzette, erleichtern.

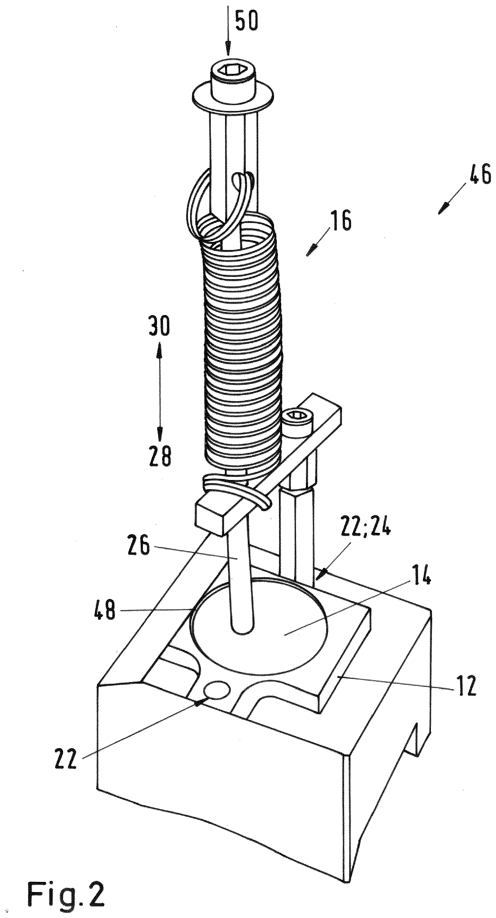

Figur 2 zeigt ein System 46 zur Klemmung zweier Bauteile 12, 14, das eine Alternative zu dem in Figur 1 beschriebenen System 10 darstellt. Allerdings sind sich die Systeme 10, 46 sehr ähnlich und beruhen auf demselben Grundprinzip, sodass hier lediglich die Unterschiede beschrieben werden. Insoweit wird zu nicht näher kommentierten Bezugszeichen in Figur 2 auf die Beschreibung zu Figur 1 verwiesen.

Auch das System 46 in Figur 2 umfasst ein erstes Bauteil 12, das ein zweites Bauteil 14 und einen Niederhalter 16. Hier umfasst das erste Bauteil 12 jedoch selbst eine komplementäre Befestigungsschnittstelle 22, die mit einer Befestigungsschnittstelle 24 (vgl. auch Figur 3) des Niederhalters 16 verbunden ist.

Das erste Bauteil 12 umfasst wiederum einen Klemmbereich 48, in oder an dem das zweite Bauteil 14 in einer Klemmposition positioniert werden kann.

Überträgt ein Stößel 26 des Niederhalters 16 nun wiederum eine Klemmkraft 50 in einer Klemmrichtung 28 auf das zweite Bauteil 14, so ergibt sich ebenfalls ein geschlossener Kraftfluss vom Niederhalter 16 über das zweite Bauteil 14 und das erste Bauteil 12 wieder zum Niederhalter 16.

Im Folgenden wird nun anhand von Figur 3 ein Niederhalter 16 zur Erzeugung einer Klemmkraft 50 beschrieben. Der Niederhalter 16 kann bspw. in den Systemen 10, 46 aus den Figuren 1 und 2 vorgesehen sein.

Der Niederhalter 16 umfasst eine Distanzstruktur 52 mit einer Befestigungsschnittstelle 24, die hier rein exemplarisch als Gewinde ausgebildet ist.

Ferner umfasst der Niederhalter 16 einen Kragarm 54, der beabstandet von der Befestigungsschnittstelle 24 von der Distanzstruktur 52 auskragt und der eine, entlang dem Kragarm 54 von der Distanzstruktur 52 beabstandete, Stößelaufnahme 56 aufweist. Die Stößelaufnahme 56 kann bspw. ein auf Passung gefertigtes Durchgangsloch sein.

In der Stößelaufnahme 56 ist ein Stößel 26 geführt und so in einem translatorischen Freiheitsgrad wahlweise in eine Klemmrichtung 28 oder eine Freigaberichtung 30 verlagerbar. Lokal bezogen auf die Stößelaufnahme 56 - also bezogen auf einen Abschnitt des Stößels 26 der sich gerade an oder in der Stößelaufnahme 56 befindet - nähert sich der Stößel 26 bei Verlagerung in Klemmrichtung 28 der Befestigungsschnittstelle 24 an und entfernt sich von dieser in Freigaberichtung 30.

Dabei ist eine Klemmfeder 32 vorgesehen, die zur Erzeugung der Klemmkraft 50 in Freigaberichtung 30 spannbar und in Klemmrichtung 28 entspannbar ist. Die Klemmfeder 50 hat eine Federsteifigkeit von 0,05 N/mm bis 0,3 N/mm und eignet sich damit besonders gut zur sicheren und schonenden Spannung kleiner, leichter oder auch empfindlicher Bauteile.

Die Klemmfeder 32 ist vorzugsweise eine Zugfeder, die mit dem Stößel 26 und dem Kragarm 54 wirkverbunden ist. In Figur 3 ist rein exemplarisch gezeigt, wie ein unterer Abschnitt 58 der Klemmfeder 32 unter den Kragarm 54 greift.

Bevorzugt ist der Stößel 26, zumindest an einem der Befestigungsschnittstelle 24 zugewandten Ende 60, aus Kunststoff hergestellt. Das Ende 60 kann bevorzugt auch verrundet sein.

Besonders bevorzugt weist die Distanzstruktur 52 eine Lagerstelle 62 auf, an welcher der Kragarm 54, bevorzugt um die Distanzstruktur 52 schwenkbar, gelagert ist. Die Lagerstelle 62 kann bspw. mit einer Schraube 63 realisiert sein. Optional kann die Schraube 63 auch die Befestigungsschnittstelle 24 bereitstellen und zu diesem Zweck als Durchgangsschraube durch die Distanzstruktur 52 hindurch ragen.

Im Übrigen kann der Stößel 26 mit der Klemmfeder 32 auf vielfältige Weise ausgebildet sein. In dem hier rein exemplarisch gezeigten Beispiel ist der Stößel 26 mehrteilig und umfasst einen hülsenartigen oberen Teil 64 und einen stabartigen unteren Teil 66. Der obere Teil 64 und der untere Teil 66 können bspw. einfach ineinandergesteckt, verklebt, verschraubt oder auf andere geeignete Weise verbunden sein.

Der oberen Teil 64 ist hier exemplarisch mit der Klemmfeder 32 verbunden, bspw. über ein Durchgangsloch 68, durch welches ein oberer Abschnitt 70 der Klemmfeder 32 geführt sein kann.

Zur Verbesserung der manuellen Bedienbarkeit in dem translatorischen Freiheitsgrad des Stößels 26 (insbesondere zum Ziehen nach oben in Freigaberichtung 30) kann der Stößel 26 eine Schraube 72 mit Unterlegscheibe 74 oder auch eine andere als Griff geeignete Struktur aufweisen.

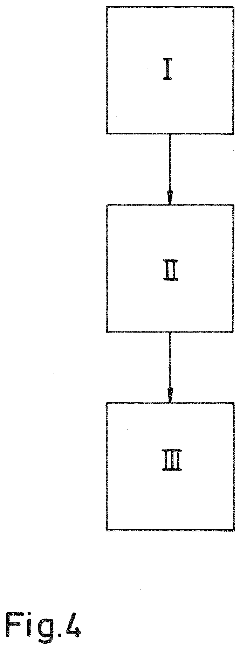

In Figur 4 wird schließlich ein Blockschema einer Verwendung eines Systems 10, 46 zur Klemmung zweier Bauteile 12, 14 dargestellt.

Dabei kann entweder ein System 46 wie in Figur 2 oder ein System 10 wie in Figur 1 beschrieben verwendet werden oder auch ein anderes geeignetes System, das einen Niederhalter 16 umfasst, wie er in Figur 3 exemplarisch beschrieben worden ist. Im Fall des Systems 10 aus Figur 1 hat dessen Aufnahmevorrichtung 18 ein erstes Bauteil 12 mit einem Klemmbereich 48 aufgenommen. Im Fall des Systems 46 aus Figur 2 umfasst dieses ein erstes Bauteil 12 mit einem Klemmbereich 48 ohne zusätzliche Aufnahmevorrichtung 18.

Die Verwendung umfasst nun wenigstens folgende Schritte:
In einem ersten Schritt I erfolgt eine Positionierung des zweiten Bauteils 14 in einer Klemmposition im Klemmbereich 48 an dem ersten Bauteil 12.

In einem zweiten Schritt II erfolgt eine Konfiguration des jeweiligen Systems 10 oder 46, sodass ein Stößel 26 des Niederhalters 16 eine Klemmkraft 50 überträgt, die einen geschlossenen Kraftfluss vom Niederhalter 16 über das zweite Bauteil 14 und das erste Bauteil 12 wieder zum Niederhalter 16 bewirkt. Das zweite Bauteil 14 wird dadurch an dem ersten Bauteil 12 in der Klemmposition sicher und schonend geklemmt.
In einem dritten Schritt III erfolgt dann zumindest einmalig eine Veränderung der Position des so konfigurierten Systems 10 oder 46 insgesamt, also mit den geklemmten Bauteilen 12 und 14 als Klemmverbund. Ergänzend oder alternativ erfolgt eine Durchführung wenigstens einer Fügeoperation zur Verbindung des ersten Bauteils 12 und des zweiten Bauteils 14.

Die Verbindung kann besonders bevorzugt unter Zugabe eines fließfähigen Bindemittels erfolgen, besonders bevorzugt unter gleichzeitiger Handhabung der gegeneinander verspannten Bauteile 12, 14, die innerhalb des Systems 10, 46 stets sicher in Klemmposition bzw. Fügeposition gehalten werden.

Besonders bevorzugt wird als erstes Bauteil 12 eine Fassung für ein optisches Element verwendet, wobei das zweite Bauteil 14 das optische Element 14 bildet. Das optische Element 14 ist besonders bevorzugt ein optischer Filter, Spiegel oder eine Linse und wird in die Fassung eingeklebt oder eingelötet.

### Bezugszeichenliste

- 10: System
- 12: erstes Bauteil
- 14: zweites Bauteil
- 16: Niederhalter
- 18: Aufnahmevorrichtung
- 20: Aufnahmebereich
- 22: komplementäre Befestigungsschnittstelle
- 24: Befestigungsschnittstelle
- 26: Stößel
- 28: Klemmrichtung
- 30: Freigaberichtung
- 32: Klemmfeder
- 34: Kavität
- 36: Auflagerand
- 38: Sackloch
- 40: Klemmmechanismus
- 42: Madenschraube
- 44: Freimachung
- 46: System
- 48: Klemmbereich
- 50: Klemmkraft
- 52: Distanzstruktur
- 54: Kragarm
- 56: Stößelaufnahme
- 58: unterer Abschnitt
- 60: Ende
- 62: Lagerstelle
- 63: Schraube
- 64: oberer Teil
- 66: unterer Teil
- 68: Durchgangsloch
- 70: oberer Abschnitt
- 72: Schraube
- 74: Unterlegscheibe
- I: erster Verwendungsschritt
- II: zweiter Verwendungsschritt
- III: dritter Verwendungsschritt

## Patentansprüche

1. Niederhalter (16) zur Erzeugung einer Klemmkraft (50), umfassend:
- eine Distanzstruktur (52) mit einer Befestigungsschnittstelle (24);
- einen Kragarm (54), der beabstandet von der Befestigungsschnittstelle (24) von der Distanzstruktur (52) auskragt und der eine, entlang dem Kragarm (54) von der Distanzstruktur (52) beabstandete, Stößelaufnahme (56) aufweist; sowie
- einen Stößel (26), der von der Stößelaufnahme (56) geführt wird und in einem translatorischen Freiheitsgrad wahlweise in eine Klemmrichtung (28) oder eine Freigaberichtung (30) verlagerbar ist, wobei der Stößel (26) sich, jeweils lokal bezogen auf die Stößelaufnahme (56), in Klemmrichtung (28) der Befestigungsschnittstelle (24) annähert und in Freigaberichtung (30) von dieser entfernt; wobei
- eine Klemmfeder (32) mit einer Federsteifigkeit von 0,05 N/mm bis 0,3 N/mm vorgesehen ist, die zur Erzeugung der Klemmkraft (50) in Freigaberichtung (30) spannbar und in Klemmrichtung (28) entspannbar ist.

2. Niederhalter (16) nach Anspruch 1, **dadurch gekennzeichnet, dass** der Stößel (26) zumindest an einem der Befestigungsschnittstelle (24) zugewandten Ende (60) aus Kunststoff besteht.

3. Niederhalter (16) nach einem der vorhergehenden Ansprüche, **dadurch gekennzeichnet, dass** der Stößel (26) zumindest an einem der Befestigungsschnittstelle (24) zugewandten Ende (60) verrundet ist.

4. Niederhalter (16) nach einem der vorhergehenden Ansprüche, **dadurch gekennzeichnet, dass** die Befestigungsschnittstelle (24) ein Gewinde umfasst.

5. Niederhalter (16) nach einem der vorhergehenden Ansprüche, **dadurch gekennzeichnet, dass** die Distanzstruktur (52) eine Lagerstelle (62) aufweist an welcher der Kragarm (54) um die Distanzstruktur (52) schwenkbar gelagert ist.

6. Niederhalter (16) nach einem der vorhergehenden Ansprüche, **dadurch gekennzeichnet, dass** die Klemmfeder (32) eine Zugfeder ist, die mit dem Stößel (26) und dem Kragarm (54) wirkverbunden ist.

7. System (46) zur Klemmung zweier Bauteile (12; 14), umfassend:
- einen Niederhalter (16) nach einem der vorhergehenden Ansprüche; und
- ein erstes Bauteil (12) mit einem Klemmbereich (48) in dem ein zweites Bauteil (14) positionierbar ist und mit einer komplementären Befestigungsschnittstelle (22), die mit einer Befestigungsschnittstelle (24) des Niederhalters (16) verbindbar oder verbunden ist, sodass ein Stößel (26) des Niederhalters (16) sich bei dessen Verlagerung in Klemmrichtung (28) auf den Klemmbereich (48) zu verlagert.

8. System (10) zur Klemmung zweier Bauteile (12; 14), umfassend:
- einen Niederhalter (16) nach einem der Ansprüche 1 bis 6; und
- eine Aufnahmevorrichtung (18) mit einem Aufnahmebereich (20), in dem ein erstes Bauteil (12) positionierbar ist und mit einer komplementären Befestigungsschnittstelle (22), die mit einer Befestigungsschnittstelle (24) des Niederhalters (16) verbindbar oder verbunden ist, sodass ein Stößel (26) des Niederhalters (16) sich bei dessen Verlagerung in Klemmrichtung (28) auf den Aufnahmebereich (20) zu verlagert.

9. Aufnahmevorrichtung (18) für ein System (10) nach Anspruch 8, umfassend:
- einen Aufnahmebereich (20) mit wenigstens einer Kavität (34), in der ein erstes Bauteil (12) positioniert werden kann;
- einen Klemmmechanismus (40), der zumindest abschnittsweise in die Kavität (34) hinein verlagerbar ist, um ein darin positioniertes erstes Bauteil (12) zu sichern; und
- eine komplementäre Befestigungsschnittstelle (22), die mit einer Befestigungsschnittstelle (24) eines Niederhalters (16) des Systems (10) verbindbar ist.

10. Verwendung eines Systems (46) gemäß Anspruch 7 oder eines Systems (10) gemäß Anspruch 8, dessen Aufnahmevorrichtung (18) ein erstes Bauteil (12) mit einem Klemmbereich (48) aufgenommen hat, wobei wenigstens folgende Schritte durchgeführt werden:
- Positionierung des zweiten Bauteils (14) in einer Klemmposition im Klemmbereich (48) an dem ersten Bauteil (12);
- Konfiguration des Systems (46), sodass der Stößel (26) des Niederhalters (16) eine Klemmkraft (50) überträgt, die einen geschlossenen Kraftfluss vom Niederhalter (16) über das zweite Bauteil (14) und das erste Bauteil (12) wieder zum Niederhalter (16) bewirkt und das zweite Bauteil (14) dadurch an dem ersten Bauteil (12) geklemmt wird; und
- zumindest einmalige Veränderung der Position des so konfigurierten Systems (10; 46) mit den geklemmten Bauteilen (12, 14) als Ganzes und/oder Durchführung wenigstens einer Fügeoperation zur Verbindung des ersten (12) und zweiten Bauteils (14).
